(19) Europäisches Patentamt / European Patent Office / Office européen des brevets

(11) **EP 4 339 069 A1**

(12) **EUROPÄISCHE PATENTANMELDUNG**

(43) Veröffentlichungstag:
20.03.2024 Patentblatt 2024/12

(21) Anmeldenummer: 22196018.0

(22) Anmeldetag: 16.09.2022

(51) Internationale Patentklassifikation (IPC):
**B61L 25/02** (2006.01)    **G01S 1/76** (2006.01)
**G01S 19/01** (2010.01)

(52) Gemeinsame Patentklassifikation (CPC):
**B61L 25/021; B61L 25/025; B61L 25/026;**
**G01S 1/763; G01S 19/01**

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(71) Anmelder: **Siemens Mobility GmbH**
**81739 München (DE)**

(72) Erfinder: **Richter, Olaf**
**13591 Berlin (DE)**

(74) Vertreter: **Siemens Patent Attorneys**
**Postfach 22 16 34**
**80506 München (DE)**

(54) **VERFAHREN ZUM SCHÄTZEN EINES ZUSTANDS EINES SCHIENENFAHRZEUGS**

(57)    Die Erfindung betrifft ein Verfahren zum Schätzen eines Zustands eines Schienenfahrzeugs, umfassend die folgenden Schritte:

Empfangen von Ausgangsdaten einer inertialen Messeinheit des Schienenfahrzeugs,

bei Überfahren einer Balise durch das Schienenfahrzeug Ermitteln einer Position der Balise,

Schätzen eines zukünftigen Zustands des Schienenfahrzeugs basierend auf einem aktuellen Zustand des Schienenfahrzeugs, den Ausgangsdaten der inertialen Messeinheit und der ermittelten Position der Balise.

Die Erfindung betrifft eine Vorrichtung, ein Schienenfahrzeug, ein Computerprogramm und ein maschinenlesbares Speichermedium.

FIG 1

EP 4 339 069 A1

**Beschreibung**

Die Erfindung betrifft ein Verfahren zum Schätzen eines Zustands eines Schienenfahrzeugs, eine Vorrichtung, ein Schienenfahrzeug, ein Computerprogramm und ein maschinenlesbares Speichermedium.

GNSS/INS-Systeme werden bei Schienenfahrzeugen, neben anderen Sensoren, zur Zeit-, Positions- und Geschwindigkeitsmessung eingesetzt. Hierbei stellt die Verbindung von GNSS-Empfängern und Inertial Navigation Systemen eine sich optimal ergänzende Kombination dar. Ein Inertial-Navigationssystem (INS) berechnet die relative Änderung von Position, Geschwindigkeit und Lage durch Integration der von einer Inertial-Measurement-Unit (IMU) (inertiale Messeinheit) gemessenen Beschleunigungen und Winkelgeschwindigkeiten. GNSS liefert absolute, driftfreie Positionen, Geschwindigkeiten und Zeit (auf Englisch: Position, Velocity, Time: PVT). Ein GNSS/INS-Filter hat den Vorteil, dass Abschnitte mit GNSS-Abschattungseffekten durch relative Messungen des INS überbrückt werden, während bei GNSS-Empfang die systematischen Fehler der Inertialsensoren geschätzt werden können, was die Inertialnavigationsleistung während GNSS-Abschattungen verbessert. Der für GNSS/INS typischerweise verwendete Datenfusionsalgorithmus ist ein Kalman-Filter.

Im Bahnumfeld gibt es bedingt durch Häuser, Brücken, Berge, Schluchten, Lawinenschutz, Oberleitung, Tunnelportale, Bahnhöfe bzw. Bahnhofsüberdachungen etc. oftmals längere Abschnitte ohne freie Sicht zu den GNSS-Satelliten, so dass die GNSS-Verfügbarkeit teils langanhaltend eingeschränkt ist. Da in diesen Bereichen das INS nicht durch GNSS Messungen gestützt werden kann, kommt es zu einem Anwachsen der Navigationsfehler mit der Zeit sowie zum Aufweiten der zugehörigen geschätzten Messunsicherheiten.

Bei aktuell verfügbaren MEMS (Mikroelektromechanisches System)-IMUs weiten die Messunsicherheiten schon nach 1 Minute so weit auf, dass sie nicht mehr für eine genaue Geschwindigkeits- und Positionsbestimmung brauchbar sind. Höherwertige IMUs, die auf Glasfaserkreisel oder Ringlaserkreisel zurückgreifen, haben eine deutlich bessere Performance, sind aber sehr kostspielig und technisch aufwändig.

Die der Erfindung zugrunde liegende Aufgabe ist darin zu sehen, ein Konzept zum hochgenauen Schätzen eines Zustands eines Schienenfahrzeugs bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem ersten Aspekt wird ein Verfahren zum Schätzen eines Zustands eines Schienenfahrzeugs bereitgestellt, umfassend die folgenden Schritte:

Empfangen von Ausgangsdaten einer inertialen Messeinheit des Schienenfahrzeugs,

bei Überfahren einer Balise durch das Schienenfahrzeug Ermitteln einer Position der Balise,
Schätzen eines zukünftigen Zustands des Schienenfahrzeugs basierend auf einem aktuellen Zustand des Schienenfahrzeugs, den Ausgangsdaten der inertialen Messeinheit und der ermittelten Position der Balise.

Nach einem zweiten Aspekt wird eine Vorrichtung bereitgestellt, die eingerichtet ist, alle Schritte des Verfahrens nach dem ersten Aspekt auszuführen.

Nach einem dritten Aspekt wird ein Schienenfahrzeug bereitgestellt, welches die Vorrichtung nach dem zweiten Aspekt umfasst.

Nach einem vierten Aspekt wird ein Computerprogramm bereitgestellt, welches Befehle umfasst, die bei Ausführung des Computerprogramms durch einen Computer, beispielsweise durch die Vorrichtung nach dem zweiten Aspekt und/oder durch das Schienenfahrzeug nach dem dritten Aspekt, diesen veranlassen, ein Verfahren gemäß dem ersten Aspekt auszuführen.

Nach einem fünften Aspekt wird ein maschinenlesbares Speichermedium bereitgestellt, auf dem das Computerprogramm nach dem vierten Aspekt gespeichert ist.

Die Erfindung basiert auf der Erkenntnis und schließt diese mit ein, dass die obige Aufgabe dadurch gelöst wird, dass zusätzlich zum aktuellen Zustand des Schienenfahrzeugs zum einen Ausgangsdaten einer inertialen Messeinheit des Schienenfahrzeugs für die Zustandsschätzung des Schienenfahrzeugs verwendet werden. Zum anderen wird eine Position einer Balise, welche das Schienenfahrzeug überfährt, für die Zustandsschätzung des Schienenfahrzeugs verwendet. Somit stehen mehr Daten zur Zustandsschätzung zur Verfügung verglichen mit dem Fall, gemäß welchem lediglich Ausgangsdaten der inertialen Messeinheit zur Zustandsschätzung verwendet werden, weil zum Beispiel momentan kein GNSS-Empfang besteht. Dadurch wird zum Beispiel der technische Vorteil bewirkt, dass der zukünftige Zustand des Schienenfahrzeugs mit größerer Präzision geschätzt werden kann.

Somit kann durch die Verwendung der Position der Balise für die Zustandsschätzung die Genauigkeit der Zustandsschätzung robustifiziert und verbessert werden.

In einer Ausführungsform des Verfahrens ist vorgesehen, dass ein Identifikator der Balise empfangen wird, wobei die Position der Balise basierend auf dem empfangenen Identifikator ermittelt wird.

Dadurch wird zum Beispiel der technische Vorteil bewirkt, dass die Position der Balise präzise ermittelt werden kann.

Die ermittelte Position kann zum Beispiel von einem Kalman-Filter verwendet werden, um den zukünftigen Zustand zu schätzen.

Der Identifikator wird zum Beispiel von der Balise drahtlos ausgesendet und mittels des Schienenfahrzeugs oder mittels der Vorrichtung empfangen. Somit ist zum Beispiel vorgesehen, dass das Schienenfahrzeug oder die Vorrichtung von der Balise den Identifikator empfängt.

In einer Ausführungsform des Verfahrens ist vorgesehen, dass das Ermitteln der Position basierend auf dem empfangenen Identifikator ein Auslesen der Position aus einer Look-up-Tabelle und/oder aus einer Datenbank umfasst, in welcher jeweils eine Vielzahl an Positionen für Balisen angegeben sind, wobei jeder Balise der Vielzahl an Balisen ein eigener Identifikator zugeordnet ist.

Dadurch wird zum Beispiel der technische Vorteil bewirkt, dass die Position der Balise zuverlässig ermittelt werden kann.

Gemäß dieser Ausführungsform ist also vorgesehen, dass eine Look-up-Tabelle und/oder eine Datenbank vorgesehen sind, in welcher für eine Vielzahl an Positionen für Balisen ihre jeweilige Position angegeben respektive gespeichert ist. Die Look-up-Tabelle und/oder die Datenbank sind zum Beispiel in der Vorrichtung gespeichert und/oder sind zum Beispiel im Schienenfahrzeug gespeichert.

In einer Ausführungsform des Verfahrens ist vorgesehen, dass ein Zeitpunkt des Überfahrens, insbesondere des Überfahrens der Balisenmitte, ermittelt wird, wobei der zukünftige Zustand basierend auf dem ermittelten Zeitpunkt geschätzt wird.

Dadurch wird zum Beispiel der technische Vorteil bewirkt, dass der zukünftige Zustand hochgenau geschätzt werden kann. Der ermittelte Zeitpunkt kann zum Beispiel von einem Kalman-Filter verwendet werden, um den zukünftigen Zustand zu schätzen.

Die Übertragung der Daten von der Balise sowie die Ermittlung der Position aus einer Datenbank können zu Latenzen führen. Da zwischen Gültigkeitszeitpunkt und Verfügbarkeitszeitpunkt der Positionsinformationen der Zustand des Schienenfahrzeugs ändert, ist vorzugsweise diese Ausführungsform vorzusehen, um diese Latenzen zu berücksichtigen.

Vorzugsweise wird zum Zeitpunkt der mittigen Überfahrt der Zustand des Kalman-Filters mit der Navigationslösung gespeichert und vorzugsweise wird die Innovation auf diesen Zustand berechnet und angewendet.

Kann der Zeitpunkt der Überfahrt nicht latenzfrei bestimmt werden, so werden zum Beispiel die Zustände im Kalman-Filter zyklisch gespeichert, wobei dann vorzugsweise bei der Berechnung der Innovation derjenige der gespeicherten Zustände ausgewählt wird, der mit der mittigen Überfahrt übereinstimmt.

In einer Ausführungsform des Verfahrens ist vorgesehen, dass eine Latenz von dem ermittelten Zeitpunkt des Überfahrens bis zum Schätzen des zukünftigen Zustands ermittelt wird, wobei der zukünftige Zustand basierend auf der ermittelten Latenz geschätzt wird. Die ermittelte Latenz wird beispielsweise genutzt, indem die Zustandsschätzung zum Gültigkeitszeitpunkt der Baliseninformation gespeichert und bei Vorliegen dieser Information zur Berechnung der Innovation für den Messschritt des Kalman-Filters verwendet wird.

Dadurch wird zum Beispiel der technische Vorteil bewirkt, dass der zukünftige Zustand unbeeinflusst von den auftretenden Latenzen bei der Bestimmung der Balisenposition geschätzt werden kann.

Auch diese Ausführungsform weist in vorteilhafter Weise die technische Wirkung auf, dass sich keine Spannungen im Kalman-Filter aufbauen. Dadurch können systematische Fehler der Inertialsensorik, also der inertialen Messeinheit, exakter geschätzt und die Performanz der Inertialnavigation gesteigert werden. Dies führt zu einer genaueren Zustandsschätzung des Schienenfahrzeugs, die sich auch in den zugehörigen, vom Datenfusionsalgorithmus berechneten Unsicherheiten der Schätzfehler abbildet.

Gemäß dieser Ausführungsform ist also vorgesehen, dass die Latenz von dem ermittelten Zeitpunkt des Überfahrens bis zum Schätzen des zukünftigen Zustands für die Zustandsschätzung verwendet wird. Es wird also insbesondere in vorteilhafter Weise berücksichtigt, dass sich das Schienenfahrzeug von dem Zeitpunkt des Überfahrens bis zum Schätzen des zukünftigen Zustands bewegen wird, sodass sich ein Ort des Schienenfahrzeugs ändern wird. Die ermittelte Latenz kann zum Beispiel von dem Kalman-Filter verwendet werden, um den zukünftigen Zustand zu schätzen.

In einer Ausführungsform des Verfahrens ist vorgesehen, dass bei einem Überfahren von zwei direkt oder indirekt aufeinander folgenden Balisen basierend auf den jeweils ermittelten Positionen der Balisen und basierend auf den jeweils ermittelten Zeitpunkten des Überfahrens eine mittlere Geschwindigkeit des Schienenfahrzeugs ermittelt wird, wobei der zukünftige Zustand basierend auf der mittleren Geschwindigkeit geschätzt wird. Die mittlere Geschwindigkeit ergibt sich aus der Formel $v = \dfrac{d}{t}$, wobei d für die Distanz zwischen den zwei Balisen steht und t für die Zeit, die das Schienenfahrzeug für die Distanz d benötigt. d kann aus den jeweiligen Positionen der Balisen ermittelt werden. t kann aus den jeweils ermittelten Zeitpunkten des Überfahrens ermittelt werden.

Dadurch wird zum Beispiel der technische Vorteil bewirkt, dass eine mittlere Geschwindigkeit des Schienenfahrzeugs ermittelt werden kann, sodass hierüber der zukünftige Zustand ermittelt werden kann. Gemäß dieser Ausführungsform steht eine weitere kinematische Größe des Schienenfahrzeugs, die ermittelte mittlere Geschwindigkeit, zur Verfügung, um den zukünftigen Zustand zu schätzen. Die mittlere Geschwindigkeit des Schienenfahrzeugs wird somit gemäß dieser Ausführungsform unabhängig von einer inertialen Messeinheit oder GNSS-Signalen ermittelt. Somit kann ein zusätzlicher Messwert, die mittlere Geschwindigkeit, für die Zustandsschätzung verwendet werden. Zum Beispiel verwendet der Kalman-Filter die mittlere Geschwindigkeit, um den zukünftigen Zustand des Schienenfahrzeugs zu schätzen.

Nacheinander folgende Balisen sind zum Beispiel unmittelbar aufeinanderfolgende Balisen oder bezeichnen Balisen, welche mittelbar aufeinander folgen, was bedeutet, dass sich zwischen diesen beiden Balisen noch eine weitere Balise befindet.

In einer Ausführungsform des Verfahrens ist vorgesehen, dass für die Position der Balise ein von einer Verlegegenauigkeit der Balise abhängiger Korrekturfaktor ermittelt wird, wobei der zukünftige Zustand unter Verwendung des Korrekturfaktors geschätzt wird.

Dadurch wird zum Beispiel der technische Vorteil bewirkt, dass der zukünftige Zustand hochgenau geschätzt werden kann.

Der Korrekturfaktor wird zum Beispiel aus der Datenbank und/oder der Lookup-Tabelle ausgelesen. Dies bedeutet, dass in der Datenbank und/oder in der Lookup-Tabelle für eine, mehrere oder alle Balisen der Vielzahl von Balisen ein jeweiliger Korrekturfaktor angegeben ist.

Gemäß dieser Ausführungsform wird also in effizienter Weise berücksichtigt, dass es beim Einbau der Balise beispielsweise zu Ungenauigkeiten hinsichtlich der Positionierung kommen kann.

Basierend auf dem Korrekturfaktor wird zum Beispiel die ausgelesene Position der Balise korrigiert, wobei der zukünftige Zustand des Schienenfahrzeugs basierend auf der korrigierten Position der Balise geschätzt wird. Somit kann der zukünftige Zustand genau geschätzt werden.

In einer Ausführungsform des Verfahrens ist vorgesehen, dass zur Verarbeitung der ermittelten Position der Balise im Kalman-Filter ein Abstandsvektor zwischen der inertialen Messeinheit und dem Referenzpunkt im Schienenfahrzeug, an dem die Balisenposition erfasst wird, berücksichtigt wird, wobei unter Verwendung des Kalman-Filters der zukünftige Zustand des Schienenfahrzeugs geschätzt wird.

Dadurch wird zum Beispiel der technische Vorteil bewirkt, dass der zukünftige Zustand präziser geschätzt werden kann.

In einer Ausführungsform des Verfahrens ist vorgesehen, dass eine Momentangeschwindigkeit des Schienenfahrzeugs unter Verwendung von Balisen durch Auswertung der Dopplerverschiebung elektromagnetischer Wellen geschätzt wird, wobei der zukünftige Zustand basierend auf der Momentangeschwindigkeit geschätzt wird.

Dadurch wird zum Beispiel der technische Vorteil bewirkt, dass der zukünftige Zustand auch bei GNSS Abschattungen über längere Zeiträume präzise geschätzt werden kann.

Zum Beispiel ist vorgesehen, dass Antennendaten empfangen werden, welche eine von einer Schienenfahrzeugantenne in Richtung der Balise abgestrahlte elektromagnetische Welle und eine von der Balise in Richtung Schienenfahrzeugantenne und mittels der Schienenfahrzeugantenne empfangene, zurückgestrahlte elektromagnetische Welle beschreiben, wobei basierend auf den Antennendaten eine Momentangeschwindigkeit des Schienenfahrzeugs basierend auf dem Dopplereffekt ermittelt wird, welcher sich zwischen der in Richtung der Balise abgestrahlten elektromagnetischen Welle und der von der Balise in Richtung Schienenfahrzeugantenne zurückgestrahlten elektromagnetischen Welle ergibt, wobei der zukünftige Zustand basierend auf der Momentangeschwindigkeit geschätzt wird.

In einer Ausführungsform des Verfahrens ist vorgesehen, dass zumindest eine Streckeninformation, insbesondere eine durchschnittliche Streckenneigung, über einen Streckenverlauf in einem Streckenabschnitt nach der Position der Balise ermittelt wird, wobei der zukünftige Zustand basierend auf der zumindest einen Streckeninformation geschätzt wird.

Dadurch wird zum Beispiel der technische Vorteil bewirkt, dass der zukünftige Zustand durch Verwendung dieser Informationen präziser und robuster geschätzt werden kann.

Über die Streckeninformation, insbesondere die Streckenneigung, steht in vorteilhafter Weise eine weitere Größe zur Verfügung, die zur Stützung der Zustandsschätzung herangezogen werden kann.

In einer Ausführungsform des Verfahrens ist vorgesehen, dass bei Stillstand des Schienenfahrzeugs ein Stillstandssignal eines Weg-Impuls-Gebers eines Schienenrads empfangen wird, welches signalisiert, dass das Schienenrad stillsteht, wobei der zukünftige Zustand basierend auf dem Stillstandssignal geschätzt wird. Dieses Stillstandssignal wird zum Beispiel vom Kalman-Filter als Geschwindigkeitsmessung verarbeitet.

Dadurch wird zum Beispiel der technische Vorteil bewirkt, dass der zukünftige Zustand präziser geschätzt werden kann. Gemäß dieser Ausführungsform wird also eine sogenannte virtuelle Null-Messung durchgeführt.

Im Stillstand ist die Geschwindigkeit in allen drei Raumrichtungen bekannt, diese Information kann im Datenfusionsalgorithmus genutzt werden. Des Weiteren kann im Stillstand der Azimut als konstant angenommen werden, woraus eine weitere virtuelle Messgröße abgeleitet werden kann. Durch Verwendung dieser virtuellen Messungen sind sämtliche Biase der Inertialsensoren beobachtbar, was ansonsten im Stillstand nicht ohne Verwendung dieser virtuellen Messungen der Fall wäre. Durch die kontinuierliche Schätzung der Inertialsensorbiase wird die Performanz der Inertialnavigation gesteigert, die sich auch in den vom Datenfusionsalgorithmus berechneten Unsicherheiten der Schätzfehler abbildet.

In einer Ausführungsform des Verfahrens ist vorgesehen, dass das Schienenfahrzeug eingerichtet ist, alle Schritte des Verfahrens nach dem ersten Aspekt auszuführen.

Zum Beispiel ist vorgesehen, dass das Verfahren mittels der Vorrichtung aus- oder durchgeführt wird.

Zum Beispiel ist vorgesehen, dass das Verfahren mittels des Schienenfahrzeugs aus- oder durchgeführt wird.

Zum Beispiel ist die Vorrichtung programmtechnisch eingerichtet, das Computerprogramm auszuführen.

Zum Beispiel ist das Schienenfahrzeug programmtechnisch eingerichtet, das Computerprogramm auszuführen.

In einer Ausführungsform ist vorgesehen, dass das Verfahren ein computerimplementiertes Verfahren ist.

Vorrichtungsmerkmale und Merkmale des Schienenfahrzeugs ergeben sich analog aus Verfahrensmerkmalen und umgekehrt. Dies bedeutet insbesondere, dass sich technische Funktionalitäten des Verfahrens aus entsprechenden technischen Funktionalitäten der Vorrichtung und/oder des Schienenfahrzeugs und umgekehrt ergeben.

Die Formulierung "zumindest ein(e)" bedeutet "ein(e) oder mehrere".

Ausgangsdaten umfassen zum Beispiel: die mittels der inertialen Messeinheit gemessenen Größen, beispielsweise kinematische Größen, - also zum Beispiel Beschleunigungen und/oder Drehraten respektive Geschwindigkeits- und/oder Winkelinkremente, jeweils gegeben in den drei Achsen eines körperfesten Koordinatensystems.

Die sechs Freiheitsgrade des Schienenfahrzeugs im dreidimensionalen Raum umfassen drei Translationen entlang von drei lotrechten Achsen und drei Rotationen um drei lotrechte Achsen, was auch als Rollen, Nicken und Gieren bezeichnet werden kann.

Eine kinematische Größe im Sinne der Beschreibung ist beispielsweise eine der folgenden kinematischen Größen: Ort, Geschwindigkeit und Beschleunigung, Drehwinkel und Winkelgeschwindigkeit.

Ausgangsdaten der inertialen Messeinheit umfassen zum Beispiel Messwerte von drei linearen Beschleunigungswerten für die translatorische Bewegung und von drei Winkelgeschwindigkeiten für die Drehraten.

Ausgangsdaten der inertialen Messeinheit umfassen zum Beispiel Beschleunigung(en), Drehrate(n), Geschwindigkeitsinkremente und/oder Winkelinkremente, insbesondere in einem körperfesten Koordinatensystem.

Ein Schienenfahrzeug umfasst zum Beispiel ein oder mehrere Triebfahrzeuge.

Die Position der Balise ist zum Beispiel durch einen Längengrad und eine geographische Breite und insbesondere durch eine Höhe angegeben. Dies bedeutet zum Beispiel, dass die Position einer Balise durch geographische Koordinaten definiert oder festgelegt ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei

FIG 1 ein Ablaufdiagramm eines Verfahrens zum Schätzen eines Zustands eines Schienenfahrzeugs,

FIG 2 eine Vorrichtung,

FIG 3 ein Schienenfahrzeug,

FIG 4 ein maschinenlesbares Speichermedium,

FIG 5 mehrere Balisen und

FIG 6 ein Schienenfahrzeug bei einer Überfahrt einer Balise

zeigen.

Im Folgenden können für gleiche Merkmale gleiche Bezugszeichen verwendet werden.

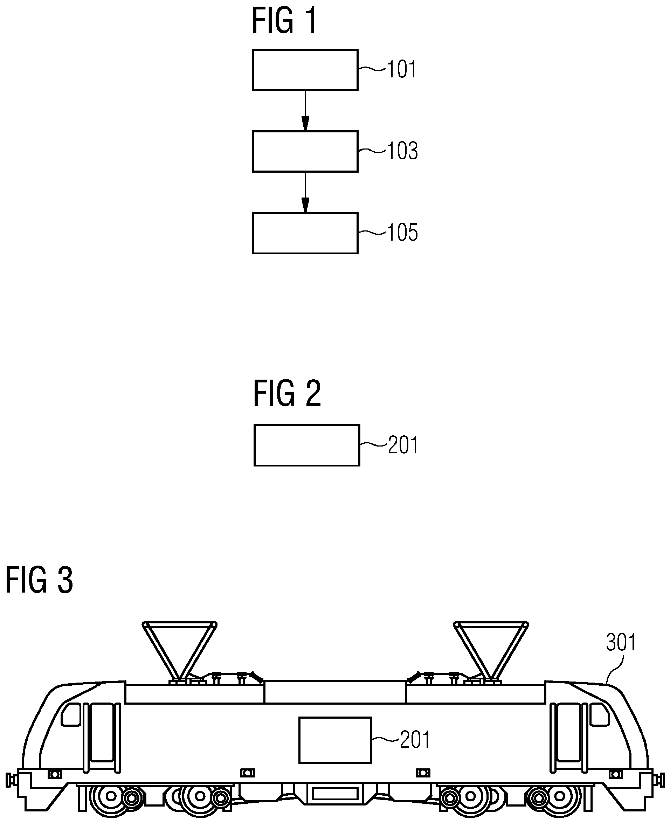

FIG 1 zeigt ein Ablaufdiagramm eines Verfahrens zum Schätzen eines Zustands eines Schienenfahrzeugs, umfassend die folgenden Schritte:

Empfangen 101 von Ausgangsdaten einer inertialen Messeinheit des Schienenfahrzeugs,
bei Überfahren einer Balise durch das Schienenfahrzeug Ermitteln 103 einer Position der Balise,
Schätzen 105 eines zukünftigen Zustands des Schienenfahrzeugs basierend auf einem aktuellen Zustand des Schienenfahrzeugs, den Ausgangsdaten der inertialen Messeinheit und der ermittelten Position der Balise.

Zum Beispiel ist vorgesehen, dass der zukünftige Zustand des Schienenfahrzeugs unter Verwendung eines Kalman-Filters geschätzt wird.

FIG 2 zeigt eine Vorrichtung 201, die eingerichtet ist, alle Schritte des Verfahrens zum Schätzen eines Zustands eines Schienenfahrzeugs auszuführen.

FIG 3 zeigt ein Schienenfahrzeug 301 umfassend die Vorrichtung 201 der FIG 2.

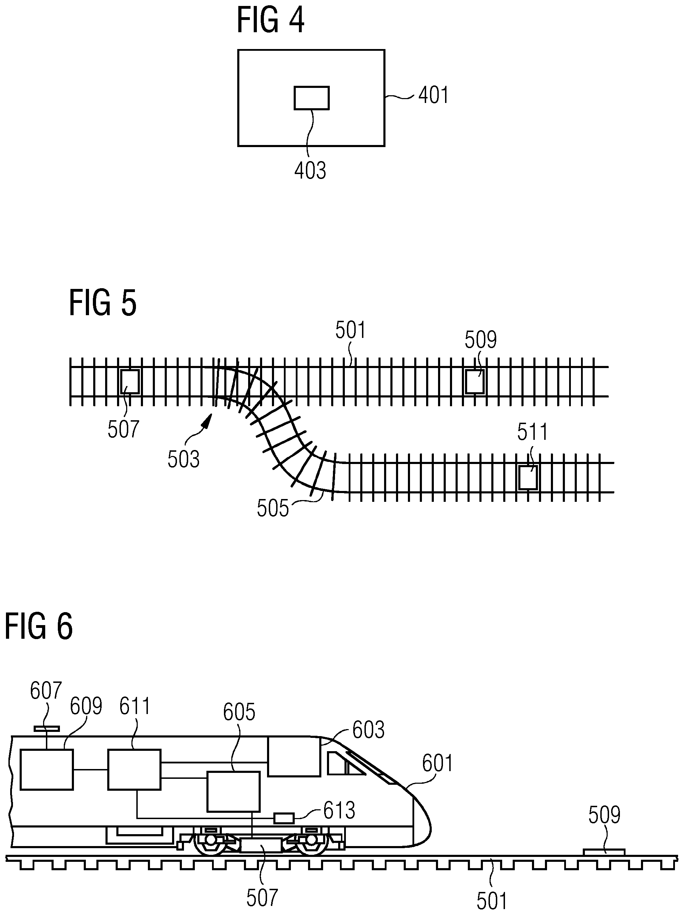

FIG 4 zeigt ein maschinenlesbares Speichermedium 401, auf dem ein Computerprogramm 403 gespeichert ist. Das Computerprogramm 403 umfasst Befehle, die bei Ausführung des Computerprogramms 403 durch einen Computer diesen veranlassen, ein Verfahren gemäß dem ersten Aspekt auszuführen.

FIG 5 zeigt ein erstes Gleis 501. An einer Weiche 503 geht ein zweites Gleis 505 von dem ersten Gleis 501 ab. An dem ersten Gleis 501 sind eine erste Balise 507 und eine zweite Balise 509 beabstandet zueinander angeordnet. Eine dritte Balise 511 ist am zweiten Gleis 505 angeordnet.

FIG 6 zeigt ein Schienenfahrzeug 601 bei einer Überfahrt über die erste Balise 507.

Das Schienenfahrzeug 601 umfasst eine inertiale Messeinheit 603 und eine Datenbank 605, in welcher eine Vielzahl an Positionen für Balisen angegeben sind, wobei jeder Balise der Vielzahl an Balisen ein eigener Identifikator zugeordnet ist.

Weiter umfasst das Schienenfahrzeug 601 eine GNSS-Antenne 607 sowie einen GNSS-Empfänger 609.

Die Abkürzung "GNSS" steht für "Global Navigation Satellite System" und kann mit globales Navigationssatellitensystem übersetzt werden.

Somit stehen zum Beispiel für eine Orts- und/oder Geschwindigkeitsbestimmung des Schienenfahrzeugs 601 GNSS-Signale zur Verfügung.

Weiter umfasst das Schienenfahrzeug 601 eine Vorrichtung 611 gemäß dem zweiten Aspekt. Die Vorrichtung 611 empfängt die Ausgangsdaten der inertialen Messeinheit 603. Weiter wird bei Überfahren der ersten Balise 507 ein Identifikator der ersten Balise 507 von einer Schienenfahrzeugantenne 613 empfangen. Der Identifikator wird von der ersten Balise 507 ausgesendet. Die Schienenfahrzeugantenne 613 empfängt diesen Identifikator.

Basierend auf dem Identifikator kann die Vorrichtung 611 die zu der ersten Balise 507 zugehörige Position aus der Datenbank 605 auslesen.

Basierend auf der so ermittelten Position der ersten Balise 507 sowie basierend auf den Ausgangsdaten der inertialen Messeinheit 603 und basierend auf dem aktuellen Zustand des Schienenfahrzeugs kann die Vorrichtung 611 einen zukünftigen Zustand des Schienenfahrzeugs schätzen.

Zum Beispiel ist vorgesehen, dass zusätzlich noch GNSS-Signale des GNSS-Empfängers 609 von der Vorrichtung 611 verwendet werden, um den zukünftigen Zustand des Schienenfahrzeugs zu schätzen.

Zum Beispiel wird der zukünftige Zustand des Schienenfahrzeugs unter Verwendung eines Kalman-Filters geschätzt. Es findet also zum Beispiel eine Fusion der Ausgangsdaten der inertialen Messeinheit 603 und der ermittelten Position der ersten Balise 507 statt und insbesondere der GNSS-Signale.

Zusammenfassend basiert das hier beschriebene Konzept insbesondere darauf, dass für eine Absolut-Ortung des Schienenfahrzeugs Positionen von im Gleis verlegten Balisen verwendet werden. Bei einer Überfahrt des Schienenfahrzeugs über eine Balise wird zum Beispiel deren Identifikator sowie insbesondere ein Zeitpunkt des Überfahrens der Balisenmitte erfasst oder ermittelt. Hierüber ist in vorteilhafter Weise eine Ortung der Balise im Streckenabbild möglich. Der Identifikator der Balise kann zum Beispiel über eine Datenbank und/oder eine digitale Karte und/oder eine Look-up-Tabelle einer Position der Balise zugeordnet werden.

Die Position der Balise ist zum Beispiel durch einen Längengrad und eine geographische Breite und insbesondere durch eine Höhe angegeben. Dies bedeutet zum Beispiel, dass die Position einer Balise durch geographische Koordinaten definiert oder festgelegt ist.

Die Position der Balise kann zum Beispiel für eine Kalibrierung eines Trägheitsnavigationssystems verwendet werden, welche die Ausgangsdaten der inertialen Messeinheit verwendet, um die Geschwindigkeit und die Position des Schienenfahrzeugs zu ermitteln.

Bei der Zustandsschätzung wird zum Beispiel die vorstehend beschriebene Latenz verwendet oder berücksichtigt. Es wird also insbesondere berücksichtigt, dass sich die Schienenfahrzeugposition vom Zeitpunkt der Überfahrt der Balise bis hin zur eigentlichen Zustandsschätzung ändert.

Weiter wird zum Beispiel eine Verlegegenauigkeit, wie vorstehend beschrieben, bei der Zustandsschätzung berücksichtigt. Eine Verlegegenauigkeit entspricht also zum Beispiel einem Fehler zwischen der wahren Position der Balisen und der in der Datenbank oder digitalen Karte oder Look-up-Tabelle angegebenen Position.

Zum Beispiel ist vorgesehen, dass zur Verarbeitung der ermittelten Position der Balise in einem Kalman-Filter der Abstandsvektor zwischen inertialer Messeinheit und dem Referenzpunkt im Schienenfahrzeug, an dem die Balisenposition erfasst wird, berücksichtigt wird, wobei unter Verwendung des Kalman-Filters der zukünftige Zustand des Schienenfahrzeugs geschätzt wird.

Zum Beispiel wird eine Momentangeschwindigkeit des Schienenfahrzeugs ermittelt und diese Momentangeschwindigkeit für die Zustandsschätzung berücksichtigt.

Zum Beispiel können mehrere nacheinander folgende Balisen überfahren werden, deren Abstände ermittelt werden können, sodass hierüber eine mittlere Schienenfahrzeuggeschwindigkeit ermittelt werden kann, welche für die Zustandsschätzung verwendet werden kann.

Nacheinander folgende Balisen sind zum Beispiel unmittelbar aufeinanderfolgende Balisen oder bezeichnen Balisen, welche mittelbar aufeinander folgen, was bedeutet, dass sich zwischen diesen beiden Balisen noch eine weitere Balise befindet.

Zum Beispiel werden Informationen über einen Streckenverlauf im Fahrtabschnitt hinter der Balise für die Zustandsschätzung verwendet. Eine solche Information umfasst zum Beispiel eine durchschnittliche Streckenneigung.

Zum Beispiel ist vorgesehen, ein Stillstandssignal zu generieren, wobei der zukünftige Zustand basierend auf dem Stillstandssignal geschätzt wird. Im Stillstand des Schienenfahrzeugs kann die Information hinsichtlich des Stillstands des Schienenfahrzeugs als Geschwindigkeitsmessung im Kalman-Filter verarbeitet und so zur Stützung der Zustandsschätzung verwendet werden. Gleiches gilt für den im Stillstand konstanten Azimut. Das Stillstandssignal kann zum Beispiel vom Schienenfahrzeug bereitgestellt oder generiert werden. Alternativ oder zusätzlich gibt ein Wegimpulsgeber über einen vorbestimmten Zeitraum keine Weginkremente in Form von Pulsen aus, was somit einem Stillstandssignal entspricht.

Zum Beispiel kann der geschätzte Zustand gespeichert und beim Anfahren des Schienenfahrzeugs verwendet werden.

Durch Verwendung der Balisenposition werden zum Beispiel die Zustände des Schienenfahrzeugs im GNSS/INS-Kalman-Filter aktualisiert und die während der freien Propagation aufgeweiteten Varianzen / Messunsicherheiten zusammengezogen. Geschwindigkeit, Position, Distanz und deren Vertrauensintervalle werden von Zugsicherungssystemen verwendet. Durch kleine Geschwindigkeitsvertrauensintervalle kann näher an der zulässigen Streckengeschwindigkeit sowie an Bremskurven gefahren werden. Hierdurch können Fahrzeiten reduziert werden. Durch kleinere Positions- und Distanzvertrauensintervalle kann das Bremsen vor Haltepunkten später erfolgen, die Zielbremsung auf den Haltepunkt erfolgt mit einer höheren Genauigkeit. Dadurch kommt der Zug oder das Schienenfahrzeug exakter vor Bahnsteigtüren zum Stehen, was das Aus-/ und Einsteigen begünstigt.

Bei modernen Zugsicherungsverfahren wie CBTC ("Communication-Based Train Control") und ETCS ("European Train Control System") werden Balisen als "Kilometersteine" zur Absolutortung eingesetzt. Der Abstand beträgt bei ETCS im Mittel weniger als 2000 m, bei CBTC im Mittel weniger als 500 m. Durch die regelmäßige Stützung der GNSS/INS mit den Balisenpositionen und ggf. Geschwindigkeiten können quasi beliebig lange GNSS-Abschattungen mit hoher Genauigkeit durchfahren werden.

Ohne die Nutzung von Balisenpositionen zur Stützung von GNSS/INS bei GNSS-Abschattungen würden in der freien Propagation nur deutlich höherwertige IMUs (Glasfaser-Optik-Gyroskop, Ringlaserkreisel), die ca. den 10fachen bis 100fachen Preis von MEMS-IMUs kosten, ein ähnlich geringes Aufweiten der Vertrauensintervalle erzielen. Diese höherwertigen IMUs unterliegen dann aber wieder den Beschränkungen der Exportkontrolle.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zum Schätzen eines Zustands eines Schienenfahrzeugs (301, 601), umfassend die folgenden Schritte:

   Empfangen (101) von Ausgangsdaten einer inertialen Messeinheit (603) des Schienenfahrzeugs (301, 601),
   bei Überfahren einer Balise (507, 509, 511) durch das Schienenfahrzeug (301, 601) Ermitteln (103) einer Position der Balise (507, 509, 511),
   Schätzen (105) eines zukünftigen Zustands des Schienenfahrzeugs (301, 601) basierend auf einem aktuellen Zustand des Schienenfahrzeugs (301, 601), den Ausgangsdaten der inertialen Messeinheit (603) und der ermittelten Position der Balise (507, 509, 511).

2. Verfahren nach Anspruch 1, wobei ein Identifikator der Balise (507, 509, 511) empfangen wird, wobei die Position der Balise (507, 509, 511) basierend auf dem empfangenen Identifikator ermittelt wird.

3. Verfahren nach Anspruch 2, wobei das Ermitteln der Position basierend auf dem empfangenen Identifikator ein Auslesen der Position aus einer Look-up-Tabelle und/oder aus einer Datenbank (605) umfasst, in welcher jeweils eine Vielzahl an Positionen für Balisen (507, 509, 511) angegeben sind, wobei jeder Balise (507, 509, 511) der Vielzahl an Balisen (507, 509, 511) ein eigener Identifikator zugeordnet ist.

4. Verfahren nach einem der vorherigen Ansprüche, wobei ein Zeitpunkt des Überfahrens, insbesondere des Überfahrens der Balisenmitte, ermittelt wird, wobei der zukünftige Zustand basierend auf dem ermittelten Zeitpunkt geschätzt wird.

5. Verfahren nach Anspruch 4, wobei eine Latenz von dem ermittelten Zeitpunkt des Überfahrens bis zum Schätzen des zukünftigen Zustands ermittelt wird, wobei der zukünftige Zustand basierend auf der ermittelten Latenz geschätzt wird.

6. Verfahren nach Anspruch 4 oder 5, wobei bei einem Überfahren von zwei direkt oder indirekt aufeinander folgenden Balisen (507, 509, 511) basierend auf den jeweils ermittelten Positionen der Balisen (507, 509, 511) und basierend auf den jeweils ermittelten Zeitpunkten des Überfahrens eine mittlere Geschwindigkeit des Schienenfahrzeugs (301, 601) ermittelt wird, wobei der zukünftige Zustand basierend auf der mittleren Geschwindigkeit geschätzt wird.

7. Verfahren nach einem der vorherigen Ansprüche, wobei für die Position der Balise (507, 509, 511) ein von einer Verlegegenauigkeit der Balise (507, 509, 511) abhängiger Korrekturfaktor ermittelt wird, wobei der zukünftige Zustand unter Verwendung des Korrekturfaktors geschätzt wird.

8. Verfahren nach einem der vorherigen Ansprüche, wobei zur Verarbeitung der ermittelten Position der Balise (507, 509, 511) in einem Kalman-Filter ein Abstandsvektor zwischen der inertialen Messeinheit (603) und dem Referenzpunkt im Schienenfahrzeug (301, 601), an dem die Balisenposition erfasst wird, berücksichtigt wird, wobei unter Verwendung des Kalman-Filters der zukünftige Zustand des Schienenfahrzeugs (301, 601) geschätzt wird.

9. Verfahren nach einem der vorherigen Ansprüche, wobei eine Momentangeschwindigkeit des Schienenfahrzeugs (301, 601) unter Verwendung von Balisen (507, 509, 511) durch Auswertung der Dopplerverschiebung elektromagnetischer Wellen geschätzt wird, wobei der zukünftige Zustand basierend auf der Momentangeschwindigkeit geschätzt wird.

10. Verfahren nach einem der vorherigen Ansprüche, wobei zumindest eine Streckeninformation, insbesondere eine durchschnittliche Streckenneigung, über einen Streckenverlauf in einem Streckenabschnitt nach der Position der Balise (507, 509, 511) ermittelt wird, wobei der zukünftige Zustand basierend auf der zumindest einen Streckeninformation geschätzt wird.

11. Verfahren nach einem der vorherigen Ansprüche, wobei bei Stillstand des Schienenfahrzeugs (301, 601) ein Stillstandssignal eines Weg-Impuls-Gebers eines Schienenrads empfangen wird, welches signalisiert, dass das Schienenrad stillsteht, wobei der zukünftige Zustand basierend auf dem Stillstandssignal geschätzt wird.

12. Vorrichtung (201, 611), die eingerichtet ist, alle Schritte des Verfahrens nach einem der Ansprüche 1 bis 11 auszuführen.

13. Schienenfahrzeug (301, 601), umfassend die Vorrichtung (201, 611) nach Anspruch 12.

14. Computerprogramm (403), umfassend Befehle, die bei Ausführung des Computerprogramms (403) durch einen Computer diesen veranlassen, ein Verfahren gemäß einem der Ansprüche 1 bis 11 auszuführen.

15. Maschinenlesbares Speichermedium (401), auf dem das Computerprogramm (403) nach Anspruch 14 gespeichert ist.

## FIG 1

101

103

105

## FIG 2

201

## FIG 3

301

201

## FIG 4

401

403

## FIG 5

501

509

507

503

505

511

## FIG 6

607 609 611 605

603

601

613

509

507

501

## EP 4 339 069 A1

Europäisches Patentamt
European Patent Office
Office européen des brevets

# EUROPÄISCHER RECHERCHENBERICHT

Nummer der Anmeldung

EP 22 19 6018

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2021/107546 A1 (ROSS RICHARD C [US] ET AL) 15. April 2021 (2021-04-15) * Zusammenfassung * * Abbildungen 1-8 * * Ansprüche 1-16 * * Absätze [0029] – [0076], [0087], [0096] – [0101], [0122] * ----- | 1-15 | INV. B61L25/02 G01S1/76 G01S19/01 |
| X | EP 0 763 712 A1 (UNION SWITCH & SIGNAL INC [US]) 19. März 1997 (1997-03-19) * Zusammenfassung * * Abbildungen 1, 2 * * Spalte 3 – Spalte 4 * ----- | 1,12-15 | |
| X | US 2021/171079 A1 (GREEN ALON [CA] ET AL) 10. Juni 2021 (2021-06-10) * das ganze Dokument * ----- | 1-15 | |
| X | US 2022/234634 A1 (BEACH DAVID [CA] ET AL) 28. Juli 2022 (2022-07-28) * Zusammenfassung * * Abbildungen 1-5 * * Absätze [0002], [0031] – [0048] * ----- | 1,7,8, 12-15 | |
| A | US 11 414 112 B2 (THALES SA [FR]) 16. August 2022 (2022-08-16) * Zusammenfassung * * Spalte 16 – Spalte 17 * ----- | 4,5 | RECHERCHIERTE SACHGEBIETE (IPC) B61L G01S |
| A | US 7 162 337 B2 (GEN ELECTRIC [US]) 9. Januar 2007 (2007-01-09) * Zusammenfassung * * Spalte 6 * ----- | 4,5 | |
| A | CN 107 255 794 B (SOUTHWEST CHINA RES INST ELECTRONIC EQUIPMENT) 1. Juni 2021 (2021-06-01) * Absätze [0053] – [0058] * ----- -/-- | 4,5 | |

Der vorliegende Recherchenbericht wurde für alle Patentansprüche erstellt

| Recherchenort | Abschlußdatum der Recherche | Prüfer |
|---|---|---|
| Den Haag | 7. März 2023 | Schmitt, Gilles |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

**EP 22 19 6018**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CN 110 588 722 A (BEIJING NAT RAILWAY RES & DESIGN INST SIGNAL & COMMUNICATION LTD) 20. Dezember 2019 (2019-12-20) * Absätze [0001] – [0005] * ----- | 4,5 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 7. März 2023 | Schmitt, Gilles |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
  .....................................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 19 6018

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-03-2023

| Im Recherchenbericht angeführtes Patentdokument | Datum der Veröffentlichung | Mitglied(er) der Patentfamilie | Datum der Veröffentlichung |
|---|---|---|---|
| US 2021107546 A1 | 15-04-2021 | US 2021107546 A1<br>WO 2021076214 A1 | 15-04-2021<br>22-04-2021 |
| EP 0763712 A1 | 19-03-1997 | AU 6445896 A<br>CA 2184563 A1<br>EP 0763712 A1<br>KR 970016632 A<br>TW 307854 B | 20-03-1997<br>19-03-1997<br>19-03-1997<br>28-04-1997<br>11-06-1997 |
| US 2021171079 A1 | 10-06-2021 | CA 3157088 A1<br>EP 4073464 A1<br>US 2021171079 A1<br>WO 2021116912 A1 | 17-06-2021<br>19-10-2022<br>10-06-2021<br>17-06-2021 |
| US 2022234634 A1 | 28-07-2022 | US 2022234634 A1<br>WO 2022162563 A1 | 28-07-2022<br>04-08-2022 |
| US 11414112 B2 | 16-08-2022 | CA 3083378 A1<br>CN 112083458 A<br>EP 3751315 A1<br>US 2022135096 A1<br>WO 2020249874 A1 | 13-12-2020<br>15-12-2020<br>16-12-2020<br>05-05-2022<br>17-12-2020 |
| US 7162337 B2 | 09-01-2007 | AT 375885 T<br>DE 602005002864 T2<br>EP 1591301 A1<br>US 2005240322 A1<br>ZA 200502980 B | 15-11-2007<br>24-07-2008<br>02-11-2005<br>27-10-2005<br>28-12-2005 |
| CN 107255794 B | 01-06-2021 | KEINE | |
| CN 110588722 A | 20-12-2019 | KEINE | |

EPO FORM P0461

Für nähere Einzelheiten zu diesem Anhang : siehe Amtsblatt des Europäischen Patentamts, Nr.12/82